# EUROPÄISCHE PATENTSCHRIFT

(11) **EP 1 603 767 B1**
(45) Veröffentlichungstag und Bekanntmachung des Hinweises auf die Patenterteilung: **01.08.2007**
(21) Anmeldenummer: 04717581.5
(22) Anmeldetag: 05.03.2004
(51) Int. Cl.: B60L 9/00, H02K 11/00

(54) **TRAKTIONSMOTOR**
TRACTION MOTOR
MOTEUR DE TRACTION

(30) Priorität: 19.03.2003 DE 10312254
(43) Veröffentlichungstag der Anmeldung: 14.12.2005
(73) Patentinhaber: SIEMENS AKTIENGESELLSCHAFT, 80333 München (DE)
(72) Erfinder: BRAUER, Michael, 91096 Möhrendorf (DE)
(86) Internationale Anmeldenummer: PCT/EP2004/002288
(87) Internationale Veröffentlichungsnummer: WO 2004/082979

(56) Entgegenhaltungen:
- WO-A-96/16467
- US-A1- 2003 057 783
- PATENT ABSTRACTS OF JAPAN vol. 015, no. 112 (C-0815), 18. März 1991 (1991-03-18) & JP 03 004855 A (TOTO LTD), 10. Januar 1991 (1991-01-10)
- MACDONALD D ET AL: "A practical guide to understanding bearing damage related to PWM drives" , PULP AND PAPER INDUSTRY TECHNICAL CONFERENCE, 1998. CONFERENCE RECORD OF 1998 ANNUAL PORTLAND, ME, USA 21-26 JUNE 1998, NEW YORK, NY, USA,IEEE, US, PAGE(S) 159-165 XP010287631 ISBN: 0-7803-4785-4 das gesamte Dokument
- PATENT ABSTRACTS OF JAPAN vol. 011, no. 333 (M-637), 30. Oktober 1987 (1987-10-30) & JP 62 114401 A (MITSUBISHI ELECTRIC CORP), 26. Mai 1987 (1987-05-26) in der Anmeldung erwähnt
- PATENT ABSTRACTS OF JAPAN vol. 2002, no. 03, 3. April 2002 (2002-04-03) & JP 2001 309505 A (TOSHIBA TRANSPORT ENG INC;TOSHIBA CORP), 2. November 2001 (2001-11-02) in der Anmeldung erwähnt

## Beschreibung

Die Erfindung betrifft einen Traktionsmotor in elektrisch oder dieselelektrisch angetriebenen Fahrzeugen, wobei der in einem Gehäuse gelagerte Traktionsmotor geerdet ist.

Bei gattungsgemäßen Fahrzeugen werden die Traktionsmotoren entweder direkt aus einem Netz oder über einen Umrichter mit leistungselektronischen Stellgliedern gespeist. Die Gehäuse der Traktionsmotoren sind dabei über ein Erdseil im elektrisch angetriebenen Fahrzeug geerdet. Aufgrund der insbesondere durch einen Umrichter prinzipbedingten Common-mode-Spannung (Nullspannung) im Traktionsmotor und den sprunghaften Spannungsänderungen an den Klemmen des Traktionsmotors kommt es im Zusammenhang mit den parasitären Kapazitäten im Traktionsmotor und in den Lagern des Traktionsmotors zu kapazitiven Strömen und Lichtbogenentladungen in den Lagern.

Des Weiteren fließen in Abhängigkeit vom gewählten Erdungskonzept des elektrisch angetriebenen Fahrzeugs Betriebsrückströme aus dem eigenen Fahrzeug oder von Fremdfahrzeugen über die Lager des Traktionsmotors. Dies führt ebenfalls zu einer Schädigung der Lager und des Schmierstoffs und damit vorzeitig zum Lagerausfall.

Um derartige Lagerschäden zu vermeiden, werden elektrisch isolierte Lager oder isolierte Lagerbuchsen verwendet. Durch den Einsatz von isolierten Lagern bzw. isolierten Lagerbuchsen werden die klassischen Wellenspannungen, niederfrequente oder DC-Betriebsströme verhindert und insbesondere umrichterbedingte kapazitive Lagerströme und Lichtbogenentladungen im Lager reduziert.

Nachteilig dabei ist, dass die isolierten Lager einen sehr hohen Anschaffungswert aufweisen und einen relativ sensiblen Einbau in den Antrieb erfordern, damit die Lagerisolation nicht beschädigt wird. Dies ist durch eine zusätzliche Prüfung der Isolation nach dem Einbau zu bestätigen.

Aus der JP 001309505 ist ein Traktionsmotor beschrieben, der starr bzw. fest geerdet ist. Eine Kapazität reduziert lediglich die Störströme des elektrisch angetriebenen Fahrzeugs.

Aus der JP 62114401 ist der Traktionsmotor ebenfalls starr geerdet. Durch Kapazitäten werden die Störströme des elektrisch angetriebenen Fahrzeugs auf kürzesten Weg zur Quelle zurückgeführt.

Aus WO96/16467 ist ein elektrischer Antrieb mit Kapazitiver Erdung bekannt.

Der Erfindung liegt demnach die Aufgabe zugrunde, eine Erdung für einen Traktionsmotor zu schaffen, die in einfacher Art und Weise die oben genannten Nachteile vermeidet.

Die Lösung der gestellten Aufgabe gelingt dadurch, dass das Gehäuse des Traktionsmotors über einen Kondensator geerdet ist und die Lagerspannung an zumindest einem Lager überwachbar ist.

Damit können die isolierten Lager ganz oder teilweise durch die wesentlich kostengünstigere elektrisch nicht isolierten Lager ersetzt werden und der Schutz der Lager vor Schädigung durch vagabundierende Ströme wird sichergestellt.

Die niederfrequenten oder DC-Betriebsrückströme des eigenen elektrischen Fahrzeugs oder von Fremdfahrzeugen, die sonst direkt über die starre Erdung zum Motor zurückfließen, werden durch den Kondensator geblockt. Somit fließen diese Stromanteile nicht bzw. nur in einem sehr geringen Maß über die Lager des Traktionsmotors.

Für die umrichterbedingten hochfrequenten Störströme stellt der Kondensator nahezu einen Kurzschluss dar (XC= 1/jwC) d.h. die hochfrequenten Ströme können wie bei der starren Erdung mittels Erdseil, aus EMV-Sicht auf kürzestem Weg zur Quelle zurückfließen. Dadurch wird vermieden, dass kapazitive oder Erdströme über die Lager fließen.

Durch die Dimensionierung des Kondensators wird die Spannung über den Lagern deutlich reduziert, so dass die Spannungsfestigkeit des Lagerschmierfilms nicht oder relativ selten überschritten wird. Hier wirkt ein kapazitiver Spannungsteiler zwischen der parasitären Wicklungsgehäusekapazität und der Kapazität des Kondensators zwischen Gehäuse des Traktionsmotors und Fahrzeugerde z.B. Drehgestell parallel zur Luft- und Lagerkapazität. Sofern die Spannung an den Lagern, also die Spannung über dem Kondensator die Spannungsfestigkeit des Schmierfilms im statischen Fall von 0,5 V bzw. im dynamischen Fall von 2 bis 10 V nicht überschreitet, wirkt der Schmierfilm als Isolator und verhindert somit die kapazitiven Lagerströme und Lichtbogenentladungen.

Zirkularströme, d.h. Kreisströme und Ströme aufgrund von Wellenspannung über die Lager des Traktionsmotors können in Verbindung mit dieser erfindungsgemäßen kapazitiven Erdung des Traktionsmotors verhindert werden, indem nur ein Lager elektrisch isoliert ausgeführt wird.

Vorteilhaft ist es, wenn die kapazitive Erdverbindung zwischen Gehäuse des Traktionsmotors und Erde im Umrichter stattfindet. D.h. es somit ein vieradriges Kabel zwischen Traktionsmotor und Umrichter vorgesehen, drei Adern zur Energiezufuhr und ein Kabel zur induktivitätsarmen Erdungsanbindung.

In einer weiteren Ausführungsform findet die kapazitive Erdverbindung zwischen dem Gehäuse des Traktionsmotors und dem Drehzahlgeber des Traktionsmotors statt. D.h. in bzw. an dem Drehzahlgeber wird der Kondensator zwischen Gehäuse des Drehzahlgebers und dem Schirm der Geberleitung geschaltet. Die Gehäuse von Drehzahlgeber und Traktionsmotor sind dabei elektrisch leitend miteinander verbunden.

Erfindunggemäß wird bei jeder der aufgeführten Ausführungsformen die Lagerspannung überwacht, d.h. als Messgröße für die Funktionsfähigkeit des Kondensators eingesetzt Im Fehlerfall steigt die Lagerspannung an, so dass damit ein Signal gesetzt wird, dass eindeutig eine Zuordnung zu einem fehlerhaften Kondensator herstellt.

Die Erfindung sowie weitere vorteilhafte Ausgestaltung der Erfindung gemäß Merkmalen der Unteransprüche werden im folgenden anhand schematisch dargestellter Ausführungsbeispiele in der Zeichnung näher erläutert. Darin zeigen:
- FIG 1: kapazitive Erdung des Gehäuses eines Traktionsmotors direkt am Traktionsmotor,
- FIG 2: kapazitive Erdung des Gehäuses eines Traktionsmotors über Umrichter,
- FIG 3: kapazitive Erdung des Gehäuses eines Traktionsmotors über Drehzahlgeber,
- FIG 4: kapazitive Erdung des Gehäuses eines Traktionsmotors über Schirm des Leistungskabels

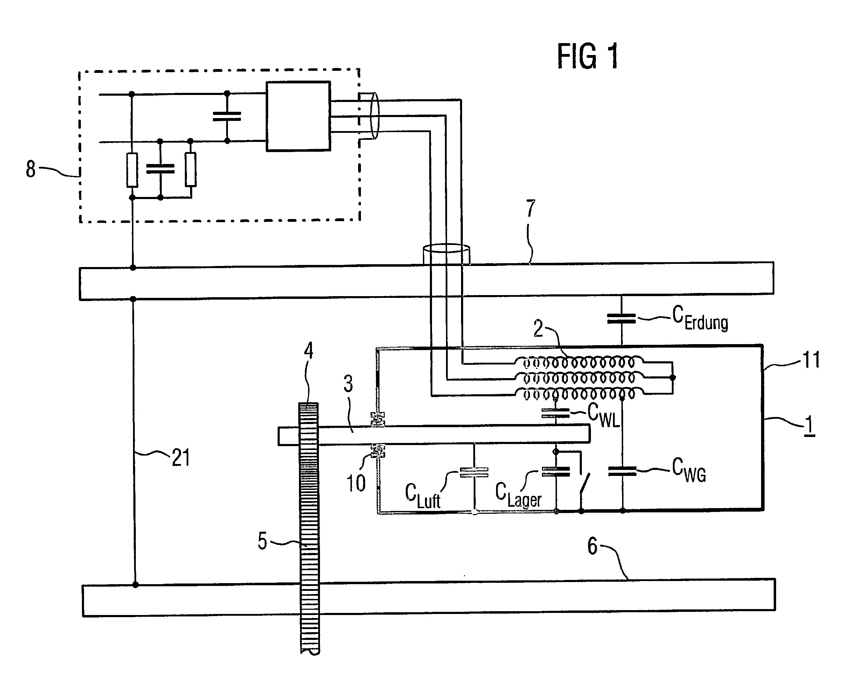

FIG 1 zeigt in prinzipieller Darstellung einen Abschnitt eines elektrisch angetriebenen Fahrzeugs durch einen Traktionsmotor 1 und einem Umrichter 8 über eine Radsatzwelle 6. Der Traktionsmotor 1 ist durch einen nicht näher dargestellten Drehzapfen an einem Wagenkasten befestigt. Der Traktionsmotor 1 treibt eine Motorwelle 3 an, die wiederum über ein Ritzel 4 und ein Großrad 5 die Radsatzwelle 6 in Rotation versetzt.

Zwischen dem Gehäuse 11 des Traktionsmotors 1 und dem Wagenkasten oder Drehgestell 7 befindet sich nunmehr der erfindungsgemäße Kondensator als kapazitive Erdung C_{Erdung}. Das Drehgestell 7 und/oder der Wagenkasten bilden die Fahrzeugerde, die gegebenenfalls als Schutzerde ausgeführt ist. Die Fahrzeugerde steht über eine elektrische Verbindung 21, z.B. über eine Radsatzbürste mit der Radsatzwelle 6 und damit mit der realen Erde über die nicht näher dargestellten Antriebsräder in elektrisch leitender Verbindung.

Aufgrund dieses Erdungskondensators C_{Erdung} kann die Spannung über den Lagern 10 deutlich reduziert werden, so dass die Spannungsfestigkeit des Lagerschmierfilms nicht oder relativ selten überschritten wird. Die Kapazität dieses Erdungskondensators beträgt bei großen Traktionsmotoren 100 - 900 µF. Bei entsprechend kleineren Traktionsmotoren 1 ist der Erdungskondensator geringer zu dimensionieren.

Hier wirkt der kapazitive Spannungsteiler zwischen der parasitären Wicklung-Gehäuse-Kapazität 2,C_{WG} und der Kapazität des Kondensators C_{Erdung} zwischen Gehäuse 11 des Traktionsmo - tors 1 und Wagenkasten oder Drehgestell 7 parallel zur Luftkapazität C_{Luft} und Lagerkapazität C_{Lager}. Sofern die Lagerspannung, also die Spannung über dem Erdungskondensator C_{Erdung}, die Spannungsfestigkeit des Schmierfilms im statischen Fall von U_{Lager} = 0, 5 V bzw. im dynamischen Fall von U_{Lager} = 2 bis 10 V nicht überschreitet, wirkt der Schmierfilm als Isolator und verhindert somit die kapazitiven Lagerströme und Lichtbogenentladungen.

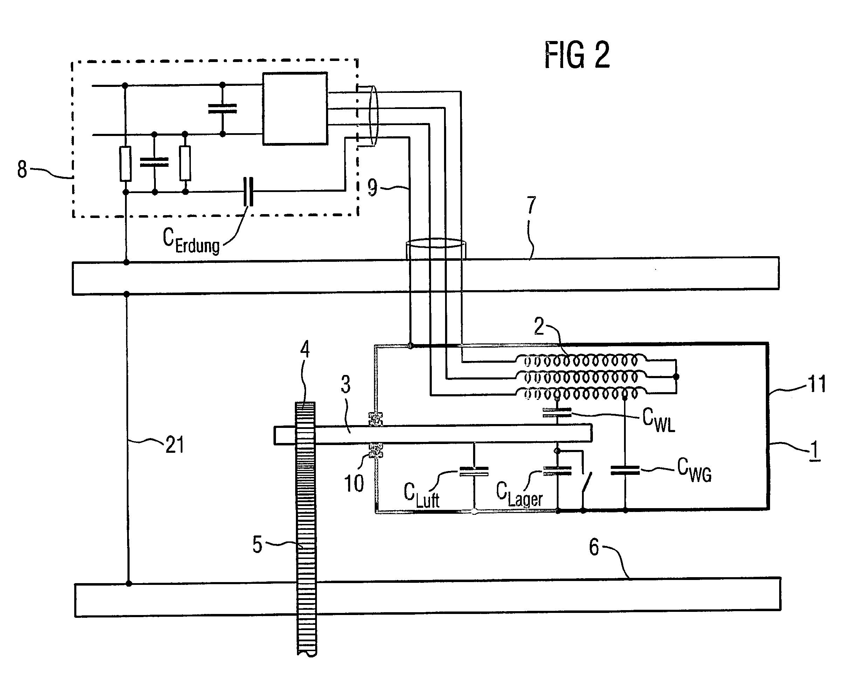

In einer vorteilhaften Ausgestaltung gemäß FIG 2 wird die Erdung mit dem Kondensator C_{Erdung} vorzugsweise induktivitätsarm in den Umrichter 8 gezogen. Damit lässt sich die Montage am Traktionsmotors 1 wesentlich vereinfachen, da der Umrichter 8 von Hause aus gewisse Erdungsvorrichtungen aufweist, an die der Erdungskondensator C_{Erdung} anschließbar ist. Das Leistungskabel 9, das der Energiezufuhr dient, weist in diesem Falle eine weitere Ader oder einen Schirm auf, mit der das Erdungspotential vom Traktionsmotor 1 in den Umrichter 8 geführt wird.

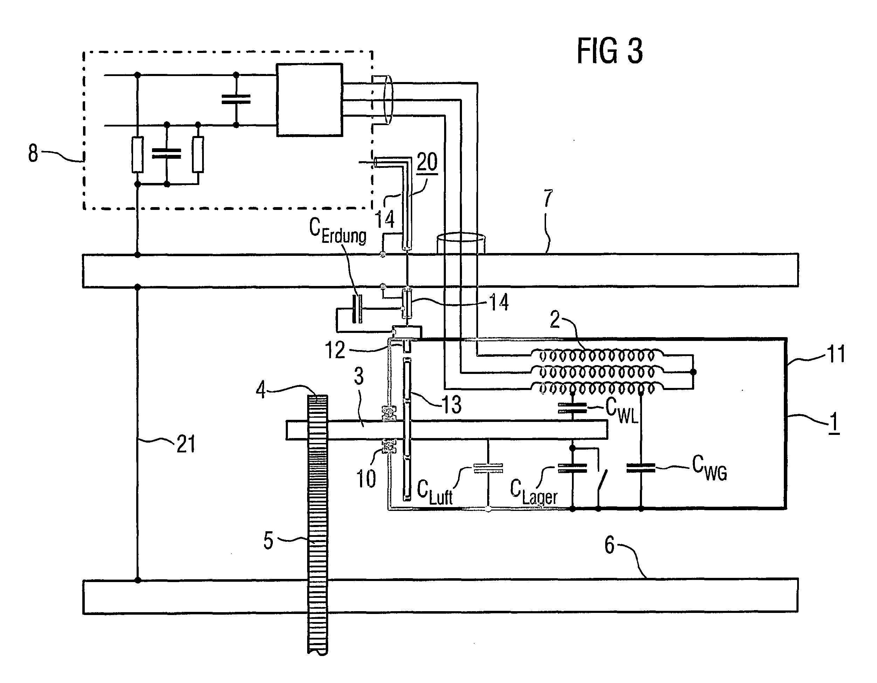

In einer weiteren vorteilhaften Ausgestaltung gemäß FIG 3 wird die kapazitive Erdung des Traktionsmotors 1 über einen Erdungskondensator C_{Erdung} am bzw. im Drehzahlgeber 12 realisiert. Das Gehäuse des Drehzahlgebers 12 ist dabei elektrisch leitend mit dem Gehäuse 11 des Traktionsmotors 1 verbunden. Der Erdungskondensator C_{Erdung} wird zwischen das Gehäuse des Drehzahlgebers 12 und den Schirm 14 des Drehzahlgeberkabels 20 geschaltet.

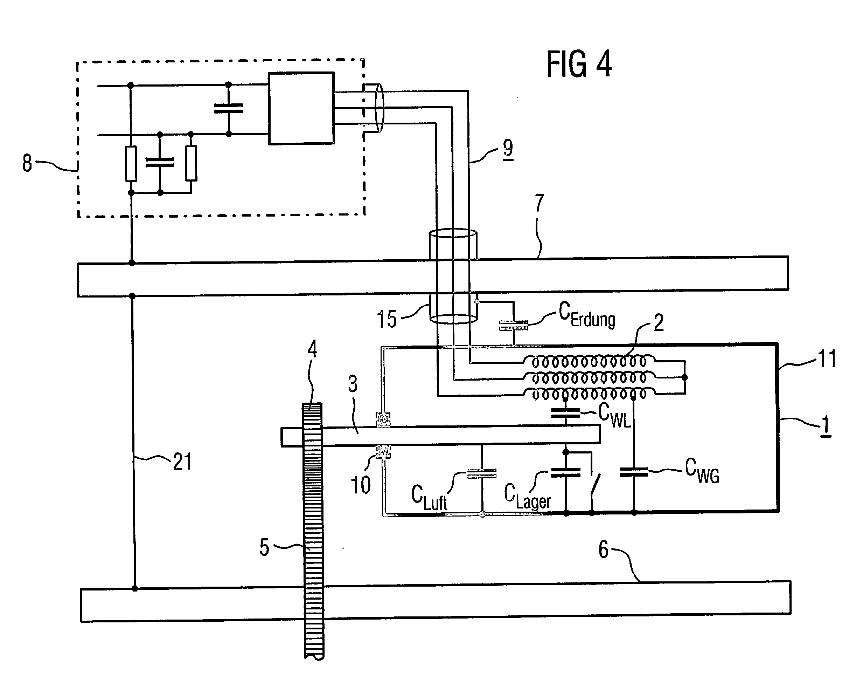

In einer weiteren vorteilhaften Ausgestaltung gemäß FIG 4 wird die kapazitive Erdung des Traktionsmotors 1 über einen Erdungskondensator C_{Erdung} zwischen dem Gehäuse 11 des Traktionsmotors 1 und dem Schirm 15 des Leistungskabels 9 realisiert.

## Patentansprüche

1. Traktionsmotor (1) in elektrisch oder dieselelektrisch angetriebenen Fahrzeugen, wobei der in einem Gehäuse (11) gelagerte Traktionsmotors (1) geerdet ist, wobei Traktionsmotor (1) ausschließlich über zumindest einen Erdungskondensator (C_{Erdung)} geerdet ist und als Messgröße einer funktionsfähigen Erdverbindung über den Erdungskondensator. (C_{Erdung)} die elektrische Spannung an zumindest einem Lager (10) durch geeignete Mittel überwach bar ist.

2. Traktionsmotor (1) nach Anspruch 1, **dadurch gekennzeichnet, dass** der Traktionsmotor (1) über leistungselektronische Stellglieder versorgbar ist.

3. Traktionsmotor (1) nach Anspruch 1 oder 2, **dadurch gekennzeichnet, dass** die Erdverbindung zwischen dem Gehäuse (11) des Traktionsmotors (1) und einer Fahrzeugerde in oder an einem Drehzahlgeber (12) erfolgt, wobei Gehäuse von Drehzahlgeber (12) und Gehäuse (11) des Traktionsmotors (1) elektrisch leitend miteinander verbunden sind.

4. Traktionsmotor (1) nach Anspruch 1 oder 2, **dadurch gekennzeichnet, dass** die Erdverbindung zwischen dem Gehäuse (11) des Traktionsmotors (1) und einer Fahrzeugerde über den Schirm (15) des Leistungskabels erfolgt.

5. Traktionsmotor (1) nach Anspruch 2, **dadurch gekennzeichnet, dass** die Erdverbindung zwischen dem Gehäuse (11) des Traktionsmotors (1) und einer Fahrzeugerde im Umrichter erfolgt.

6. Traktionsmotor (1) nach Anspruch 5, **dadurch gekennzeichnet, dass** die Erdverbindung über eine separate Leitung im Energieversorgungskabel (9) oder über den Kabelschirm des Energieversorgungskabels (9) erfolgt.

## Claims

1. Traction motor (1) in vehicles with an electric or diesel-electric drive, the traction motor (1) which is mounted in a housing (11) being earthed, in which the traction motor (1) is earthed via at least one earthing capacitor (Cₑₐᵣₜₕ) and the electrical voltage is monitored by suitable means at at least one bearing (10) as a measured variable of a functionally capable earthing connection via the earthing capacitor (Cₑₐᵣₜₕ).

2. Traction motor (1) according to claim 1, **characterized in that** the traction motor (1) can be supplied via electronic power actuating elements.

3. Traction motor (1) according to claim 1 or 2, **characterized in that** the earthing connection is between the housing (11) of the traction motor (1) and a vehicle earth is made in or on a rotational speed sensor (12) wherein housings of the rotational speed sensor (12) and housing (11) of the traction motor (1) are electrically conductively connected to one another..

4. Traction motor (1) according to claim 1 or 2, **characterized in that** the earthing connection between the housing (11) of the traction motor (1) and a vehicle earth is made via the shielding (15) of the power cable.

5. Traction motor (1) according to claim 2, **characterized in that** the earthing connection between the housing (11) of the traction motor (1) and a vehicle earth is made in the converter.

6. Traction motor (1) according to claim 5, **characterized in that** the earthing connection is made via a separate line in the power supply cable (9) or via the cable shielding of the power supply cable (9).

## Revendications

1. Moteur de traction (1) dans des véhicules à entraînement ou traction électrique ou Diesel-électrique, dans lequel le moteur de traction (1) monté dans un carter (11) est mis à la terre, dans lequel le moteur de traction (1) est mis à la terre exclusivement par l'intermédiaire d'au moins un condensateur de mise à la terre (Cterre), et dans lequel, en guise de grandeur de mesure d'une liaison de terre en état de fonctionnement par l'intermédiaire du condensateur de mise à la terre (Cterre), il est possible de surveiller la tension électrique au niveau d'au moins un palier (10) à l'aide de moyens appropriés.

2. Moteur de traction (1) selon la revendication 1, **caractérisé en ce que** le moteur de traction (1) peut être alimenté par l'intermédiaire d'organes de régulation électroniques de puissance.

3. Moteur de traction (1) selon la revendication 1 ou 2, **caractérisé en ce que** la liaison de terre entre le carter (11) du moteur de traction (1) et une terre du véhicule s'effectue dans ou au niveau d'un capteur de vitesse de rotation (12), le carter du capteur de vitesse de rotation (12) et le carter (11) du moteur de traction (1) étant reliés mutuellement sur le plan électrique.

4. Moteur de traction (1) selon la revendication 1 ou 2, **caractérisé en ce que** la liaison de terre entre le carter (11) du moteur de traction (1) et une terre du véhicule s'effectue par l'intermédiaire du blindage (15) du câble de puissance.

5. Moteur de traction (1) selon la revendication 2, **caractérisé en ce que** la liaison de terre entre le carter (11) du moteur de traction (1) et une terre du véhicule s'effectue dans le convertisseur.

6. Moteur de traction (1) selon la revendication 5, **caractérisé en ce que** la liaison de terre s'effectue par l'intermédiaire d'un conducteur séparé dans le câble d'alimentation en énergie (9), ou bien par l'intermédiaire du blindage de câble du câble d'alimentation en énergie (9).
